# EUROPÄISCHE PATENTANMELDUNG

(11) **EP 1 890 470 A1**
(43) Veröffentlichungstag der Anmeldung: **20.02.2008**
(21) Anmeldenummer: 06017301.0
(22) Anmeldetag: 18.08.2006
(51) Int. Cl.: H04M 3/42, H04M 7/00

(54) **Vermitteln eines anonymen VoIP-Gespräch derart, dass sich aus den ausgetauschten IP-Paketen nicht die Gesprächsteilnehmer ermitteln lassen**

(71) Anmelder: Nokia Siemens Networks GmbH & Co. KG, 81541 München (DE)
(72) Erfinder: Höhne, Matthias, 15518 Langenwahl (DE)

(57) **Zusammenfassung**

Die Erfindung behandelt das Problem, dass bei einer herkömmlichen VoIP-Verbindungen durch eine Analyse der ausgetauschten IP-Pakete immer Ursprung und Ziel der Pakete ermittelt werden kann und damit die Adressen der Gesprächspartner gespeichert/missbraucht/veröffentlicht usw. werden können. Dieses Problem wird dadurch überwunden, dass Verbindungen zwischen den Gesprächsteilnehmern immer nur indirekt aufgebaut werden und zwar über Teilverbindungen von jedem Gesprächsteilnehmer zu einer so genannten "Mixing Unit", bzw. "Conference Unit". Damit können folgende Telekommunikationsdienste realisiert werden
• VIP-Einmal-Telefonnummer bzw. Telefonnummer mit Verfallsdatum
• Anonyme Beratung
• Anonymer Informationsaustausch
• Anonymer Treffpunkt im Netz

## Beschreibung

### Problem, das der Erfindung zugrunde liegt

a) Bekannte, berühmte oder prominente Personen können von ihrem Wohnsitz aus keine Telefongespräche führen, ohne dabei dem Gesprächspartner ihre (statische) Telefonnummer preiszugeben.
b) Anrufer, die ein anonymes Gespräch führen wollen, müssen dies von einem öffentlichen Fernsprecher aus tun, da der Ursprung des Telefonats immer zu ermitteln ist.

### Die genannten Probleme bestehen, weil ein

VoIP-Teilnehmer oder POTS-Teilnehmer normalerweise eine statische Telefonnummer erhält. Bei der statischen Telefonnummer handelt es sich im Falle von SIP um die statische Adresse eines so genannten SIP-Servers. Wenn z.B. eine Verbindung zu sip:vorname.nachname@firma.com aufgebaut werden soll, dann sucht die Telefonie-Software den für die Domäne firma.com zuständigen SIP-Server, baut zu diesem mit dem SIP-Protokoll eine Verbindung auf und teilt ihm mit, dass jemand den Teilnehmer vorname.nachname anrufen will.
Der SIP-Server gibt dann nähere Details bekannt, mit deren Hilfe der Teilnehmer gerade erreichbar ist, insbesondere seine momentane, d.h. dynamische IP-Adresse.

### Bisherige Lösung des Problems

Es müssen für solche anonyme Verbindungen eigens dafür eingerichtete Telefonanschlüsse benutzt werden, da bei einer herkömmlichen VoIP-Verbindung durch eine Analyse der ausgetauschten IP-Pakete immer Ursprung und Ziel (Aufenthaltsort) ermittelt werden kann und damit die Adressen gespeichert/missbraucht/veröffentlicht usw. werden können.

### Lösung des Problems gemäß der Erfindung

Gemäß der Erfindung wird eine Verbindung zwischen Teilnehmern durch einen Server hergestellt, und zwar derart, dass die Verbindung mithilfe von Teilverbindungen zwischen Server und Teilnehmern realisiert wird.
Aufgrund dieser Realisierung mithilfe von Teilverbindungen wird die Verbindung anonymisiert, d.h. Ursprung und Ziel der IP-Pakete der Verbindung können nicht mehr ermittelt werden.

Damit können folgende Features realisiert werden
• VIP-Einmal-Telefonnummer
• VIP-Telefonnummer mit Verfallsdatum
• Anonyme Beratung
• Anonymer Informationsaustausch
• Anonymer Treffpunkt im Netz

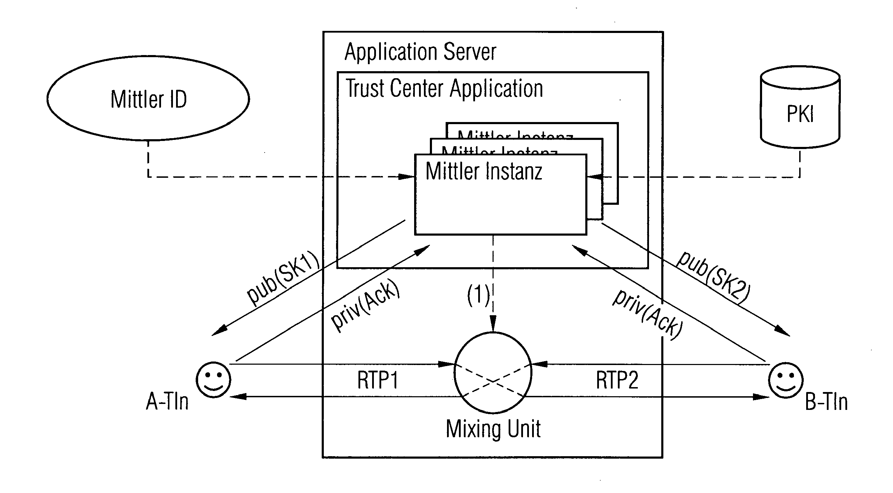

Die genannten Features können mit einem Application Server gemäß der Figur der Zeichnung realisiert werden, das ein Ausführungsbeispiel der Erfindung darstellt und im folgenden näher erläutert wird.

Die Figur zeigt einen Application Server, der ein Trust Center und eine Mixing Unit beinhaltet. Das Trust Center ist eine Applikation, die auf dem Application Server bereitgestellt wird und es ermöglicht, dass sich ein Teilnehmer gegenüber dem Trust Center mittles PKI-Verfahren identifizieren kann, d.h. der public key des Teilnehmers mit samt seinen anderen Daten ist bei der Trust Center Applikation fälschungssicher gespeichert. Der Application Server ist Bestandteil eines VoIP Netzes (Voice over IP/Internet-Telefonie) und über das Internet von einem PC aus erreichbar. (Anmerkung: Hierbei muss nicht immer ein PC bei der Kommunikation beteiligt sein, auch ein entsprechend programmiertes Telefon kann diese Aufgaben übernehmen.)

### Mittler, Mittler-Instanz, Schlüsselaustausch, Mixing Unit, RTP-Stream

Die Trust Center Applikation beinhaltet ein Programm bzw. Programm-Komponente, die als Mittler-Programm oder vereinfacht als Mittler bezeichnet wird. Weil nahezu beliebig viele Nutzer gleichzeitig den Service dieses Mittler-Programms nutzen können sollen, werden so genannte (Mittler-)Instanzen des Programms erzeugt. Das geschieht, indem für alle Variablen, die für eine Verbindung nötig sind, Speicher reserviert wird, wo die jeweiligen Zustände der Verbindung (Zustandsmaschine) und andere Daten eingespeichert werden. Dies ist das Abbild einer Verbindung. Wird die Verbindung beendet, existieren auch die zugehörigen Daten nicht mehr, da der Speicher wieder frei gegeben wird. Der Programm-Code, der für den Ablauf verantwortlich ist, existiert dagegen nur einmal. Damit der Programm-Code des Mittler-Programms weiß, welche Verbindung gerade bearbeitet werden soll, gibt es für jeden Variablensatz (Mittler Instanz) einen Zeiger auf eine Speicheradresse und eine Nummer zur Identifizierung (Mittler-ID). Im Zusammenhang mit der Erfindung wird der Programm-Code im Weiteren auch als Mittler bezeichnet und ein spezieller Mittler für eine bestimmte Verbindung wird als Mittler-Instanz bezeichnet.

Der Mittler vermittelt (1) den geheimen Treffpunkt der Teilnehmer. Im Falle einer nicht nur anonymen sondern auch geheimen Verbindung ist der Mittler außerdem für die Erzeugung und den Austausch der Schlüssel verantwortlich.
Das Zustandekommen der Verbindung geschieht nach folgendem Prinzip:
Über einen bekannten Mechanismus wird ein sog. Session Key, also ein automatisch generierter Schlüssel ausgetauscht, der nur für diese Telefonverbindung dieses einen Teilnehmers gültig ist, d.h. nur für das jeweilige Leg. Für jedes weitere Leg, also jeden weiteren Teilnehmer wird ein anderer Session Key generiert.
Der Session Key (SK) wird, verschlüsselt mit dem Publik Key des Teilnehmers, an das Endgerät (Computer oder Telefon) des Teilnehmers geschickt (pub(SK)), eventuell um einen zufälligen Challenge Code erweitert. Den Publik Key liefert eine sichere Datenbank (PKI), in der alle Daten eines Teilnehmers fälschungssicher gespeichert sind. Das Endgerät bestätigt den Erhalt des SK, indem ein Hash-Code (Digest) aus dem SK (und dem Challenge Code) berechnet wird und mit dem Private Key des Teilnehmers verschlüsselt (unterschrieben) an das Trust Center zurück gesendet wird (priv(Ack)). Damit wird sichergestellt, dass nur der Teilnehmer und der Mittler im Besitz des Session Keys sind. Die Art und Weise des Aushandelns des Session Key ist ein gängiges Verfahren.
Mit den jeweiligen Session Keys wird jede Teilverbindung verschlüsselt, und zwar genau der Weg vom Teilnehmer bis zur Mixing Unit.

Jeder von dem Mittler angelegten Mittler-Instanz wird eine Mixing Unit zugeordnet (1). Diese Mixing Unit empfängt die ankommenden verschlüsselten Sprachpakete, entschlüsselt sie (nur die Mixing Unit und der entsprechende Teilnehmer ist im Besitz des Schlüssels), mischt sie und stellt sie ausgehend allen Teilnehmern zur Verfügung, und zwar verschlüsselt mit dem Session Key, der dem Empfänger zugeordnet ist.

Das Endgerät eines Teilnehmers sendet für herkömmliche VoIP-Verbindungen Datenpakete, die die Sprache enthalten, über das RTP-Protokoll zu dem Endgerät des anderen Teilnehmers. Im Falle des in der Figur dargestellten Ausführungsbeispiels werden die Sprachpakete von dem jeweiligen Endgerät mit dem jeweiligen Session Key verschlüsselt und an die Mixing Unit gesendet

Die Mixing Unit kann die Pakete mit Hilfe der von der Mittler-Instanz gespeicherten Session Keys wieder entschlüsseln. Die entschlüsselten Pakete von der A-Seite und von der B-Seite werden addiert (Mixing) und, erneut mit dem Session Key der jeweiligen Teilnehmer-Seite verschlüsselt, gleichermaßen an alle beteiligten Teilnehmer geschickt und dort wieder entschlüsselt. Das Mischen von RTP Streams ist für sich allein betrachtet gängige Technik (auch bekannt als Conference U-nit).

### Einschub: Vergleich der Erfindung mit bekanntem VoIP-Call

Bei dem bekannten VoIP-Call mittels SIP wendet sich der Anrufer (A-Tln) an einen SIP-Server des angerufenen Tln (B-Tln). Der SIP-Server gibt dem Anrufer die IP-Adresse zurück, unter der der B-Tln momentan erreichbar ist und übernimmt die Signalisierung zu der Sprachverbindung (RTP Stream), die direkt zwischen A- und B-Teilnehmer aufgebaut wird. Die IP-Adresse des B-Tln ist in diesem Fall zwar nicht statisch. Dennoch ist der B-Tln bei diesem Verfahren immer erreichbar, wenn er sich beim SIP-Server registriert hat.

Bei der Erfindung gibt der Server dem Anrufer (A-Tln) nicht die IP-Adresse des B-Tln zurück, sondern die ID einer Mittler Instanz, die von dem Mittler für die Realisierung der Verbindung erzeugt wurde. Mithilfe der (Mittler-)ID besteht für den A-Tln nun eine (Teil-)Verbindung zu der Mixing Unit und dadurch indirekt, d.h. über die Mixing Unit auch eine Verbindung zu dem B-Tln.

### Fortsetzung der Beschreibung der Erfindung:

Mit dem gesicherten Austausch der Session Keys und der anschließenden Verschlüsselung werden die Mixing Units zu geheimen abhörsicheren virtuellen Besprechungsräumen (virtuelle Treffpunkte), in denen sich Teilnehmer anonym treffen können und die in fast beliebigen Mengen erzeugt und ohne Spuren zu hinterlassen vernichtet werden können und während ihrer Existenz durch die Verschlüsselung unauffindbar sind.
Die Erfindung kann auch für vertrauliche Video-Konferenzen genutzt werden. Mit den bekannten Mechanismen zur Prüfung einer elektronischen Signatur können z.B. nur Teilnehmer zugelassen werden (d.h. einen Session Key bekommen), die eine Verpflichtung zur Vertraulichkeit elektronisch unterschrieben haben.

Im Folgenden werden verschiedene Anwendungsfälle (User Cases), die mithilfe der Erfindung realisiert werden können, beschrieben:
1. B ist eine wichtige Person (z.B. Präsident), d.h. Anrufer A kennt diese Person aus dem öffentlichen Leben. A möchte B einmalig erreichen (Einmal-Telefonnummer oder Telefonnummer mit Verfallsdatum) Verfahrensweise 1: B hat Account im Trust Center. A meldet sich für ein Telefongespräch mit B an. B wird ein Vorschlag bezüglich Zeit und Dauer übermittelt. Wird dieser Vorschlag von B bestätigt, wird A darüber informiert. Für B wird eine Einmal-Telefonnummer (d.h. eine Nummer für eine einmalige Verbindung zu B) erzeugt, die A mitgeteilt wird. A kann dann in diesem Zeitfenster B unter der genannten Telefonnummer erreichen. Wenn A in diesem Zeitfenster unter der Nummer beim Trust Center anruft, wird eine Mittler Instanz mit zugehöriger Mittler-ID für die Realisierung dieser Verbindung erzeugt.
   Verfahrensweise 2: B lässt sich von einem Trust Center seiner Wahl eine Telefonnummer für ein von ihm selbst gewähltes Zeitfenster geben und veröffentlicht diese zusammen mit der Trust Center Adresse auf der Homepage oder über andere Wege wie Rundfunk oder Zeitungen. B kann nun von beliebigen Anrufern A innerhalb des Zeitfensters unter dieser Telefonnummer angerufen werden.
2. Anonyme Beratung: A will bei einem Telefongespräch mit B seine Identität verschleiern. Hierzu lässt er sich von einem Trust Center seiner Wahl eine Verbindung zu B aufbauen, d.h. A fordert das Trust Center unter der Angabe der Teilnehmernummer von B auf, eine für A anonyme Verbindung zu B aufzubauen. Beim Verbindungsaufbau wird zunächst über Ansage/Keypad-Eingabe das Einverständnis von B für diesen anonymen Anruf eingeholt. Hiernach erfolgt der Aufbau einer optional verschlüsselten Telefonverbindung mithilfe der Trust Center Application, d.h. Erzeugung einer Mittlerinstanz mit Mittler-ID, usw. zwischen A und B. Um Straftaten vorzubeugen, können im Falle der verschlüsselten Telefonverbindung die Keys beim Trust Center hinterlegt werden und auf richterlichen Beschluss offen gelegt werden.
3. Auf demselben Weg (Herstellen einer anonymen Verbindung durch Erzeugung einer Mittler Instanz mit zugehöriger Mittler-ID ohne Vergabe einer Einmal-Teilnehmernummer) kann eine anonyme und verschlüsselte IP-Verbindung hergestellt werden, bei der die Mittler Instanz M den Eingang einer Zahlung von A gegenüber B bestätigt und B die gekaufte Information an M übermittelt. A erhält die Information (Ware) und B kann sich von M die bereits erfolgte Zahlung auf sein Konto gutschreiben lassen (Anonymer Einkauf von Information). Hierbei ist auch vorstellbar, dass auch gegenständliche Ware über ein Trust Center von B nach A verschickt wird, wenn A für diesen Vorgang seine Adresse bei M hinterlässt (Anonymer Einkauf von Ware).
4. Ein natürlicher Mittler (natürliche Person) kennt A und B. A und B kennen die Identität des jeweils anderen untereinander nicht (Beispiel: Ein verdeckter Ermittler oder Informant (A) kann eine brisante Information an eine Behörde oder Zeitung (B) weiterleiten. Der Mittler kennt beide, jedoch nicht die Information. Um die Sicherheit beider Seiten zu gewährleisten, kann die Information weitergeleitet werden, ohne Quelle oder Ziel der Information der jeweils anderen Seiten bekannt zu machen. Jemand, der bestrebt ist, den Informationsfluss zu unterbinden, hat keine Chance, da die Information von einer anonymen Quelle an ein anonymes Ziel übergeben wird). Der Mittler nennt beiden die ID einer erzeugten Mittlerinstanz, d.h. einen geheimen Treffpunkt im Netz. Mithilfe der Mittler ID kann der Teilnehmer A den Teilnehmer B anrufen und umgekehrt. Die Verbindung kann dabei abhörsicher verschlüsselt werden.
5. A und B kennen sich. A will B anrufen und dabei seinen Aufenthaltsort verschleiern und gegebenenfalls abhörsicher telefonieren (oder chatten).

### Abschließende Bemerkungen:

Die erfindungsgemäße Lösung ermöglicht das Erzeugen eines netzzentralen Treffpunkts, der gegebenenfalls durch Verschlüsselung gesichert, beliebig kreiert und wieder vernichtet werden kann, der für niemanden auffindbar ist und der keine Spuren hinterlässt, die von Dritten zum Schaden der Nutzer aufgenommen werden können (außer von Personen, die vom Gesetz her dazu autorisiert sind, diese Spuren offen legen zu lassen).
Dieser netzzentrale Treffpunkt kann wegen des vom Trust Center verwendeten PKI-Verfahrens auch dazu benutzt werden, um einen Beweis für eine telefonische Absprache für beide Seiten (Vertragsbindung) zu hinterlegen, da sich beide Teilnehmer beim Trust Center authentifizieren müssen (notarielle Funktion).
Durch die Erfindung sind Audio- und Video-Konferenzen mit unterschiedlichen Sicherheitsanforderungen für die jeweiligen Teilnehmer realisierbar (z.B. zwei Teilnehmer im Weißen Haus und ein Botschafter im Ausland).

## Patentansprüche

1. Verfahren zum Herstellen einer Verbindung zwischen Teilnehmern, demgemäß
eine Verbindung zwischen Teilnehmern durch einen Server hergestellt wird, und zwar derart, dass die Verbindung mithilfe von Teilverbindungen zwischen Server und Teilnehmern realisiert wird.

2. Verfahren nach Anspruch 1,
**dadurch gekennzeichnet,**
**dass**
a) für jede herzustellende Verbindung eine Instanz (Mittler Instanz) mit zugehöriger Identifizierungsnummer (ID) erzeugt wird,
b) die genannte ID den Teilnehmern mitgeteilt wird,
c) die ID von einem Teilnehmer zur Adressierung der Pakete der Teilverbindung zwischen Teilnehmer und Server benutzt wird.

3. Verfahren nach Anspruch 1 oder 2,
**dadurch gekennzeichnet,**
**dass**
a) von dem Server für einen ersten Teilnehmer (B-Tln) eine Teilnehmernummer vergeben wird,
b) von dem Server auf Anforderung mindestens eines weiteren Teilnehmer (A-Tln) anhand der genannten Nummer eine Verbindung in der genannten Weise zu dem genannten ersten Teilnehmer hergestellt wird.

4. Verfahren nach Anspruch 3,
**dadurch gekennzeichnet,**
**dass** die Nummer auf Anforderung eines der weiteren Teilnehmer und bei Zustimmung des ersten Teilnehmers (B-Tln) für eine einmalige Verbindung vergeben wird.

5. Verfahren nach Anspruch 3,
**dadurch gekennzeichnet,**
**dass** die Nummer auf Anforderung des ersten Teilnehmers (B-Tln) für eine bestimmte Zeitspanne vergeben wird.

6. Verfahren nach Anspruch 1 oder 2,
**dadurch gekennzeichnet,**
**dass**
a) von einem ersten Teilnehmer (A-Tln) an den Server eine Anforderung zum Herstellen einer Verbindung zu einem zweiten Tln (B-Tln) über eine bekannte Nummer des zweiten Teilnehmers gestellt wird,
b) Von dem Server die Verbindung in der genannten Weise hergestellt wird.

7. Verfahren nach 6,
von dem Server vor dem Herstellen der Verbindung das Einverständnis des zweiten Teilnehmers eingeholt wird.

8. Verfahren nach Anspruch 1 oder 2,
**dadurch gekennzeichnet,**
**dass**
a) von einem ersten Teilnehmer (Mittler-Person) an den Server eine Anforderung zum Herstellen einer Verbindung zwischen einem zweiten und einem dritten Teilnehmer gestellt wird,
b) Von dem Server die angeforderte Verbindung in der genannten Weise hergestellt wird.

9. Verfahren nach einem der Ansprüche 1 bis 8,
**dadurch gekennzeichnet,**
**dass**
von dem Server die Identität der Teilnehmer vor dem Herstellen der genannten Verbindung geprüft wird.

10. Verfahren nach Anspruch 9,
**dadurch gekennzeichnet,**
**dass**
die Identität nach dem PKI-Verfahren geprüft wird.

11. Verfahren nach Anspruch 9 oder 10,
**dadurch gekennzeichnet,**
**dass** die über die genannte Verbindung zu übertragenden Daten verschlüsselt werden.

12. Server, der
eine Verbindung zwischen Teilnehmern in der Art herstellt, dass er die Verbindung mithilfe von Teilverbindungen zwischen sich und den Teilnehmern der Verbindung realisiert.

13. Server nach Anspruch 12,
**dadurch gekennzeichnet,**
**dass**
a) er für jede herzustellende Verbindung eine Instanz (Mittler Instanz) mit zugehöriger ID zur Identifizierung einer Verbindung erzeugt,
b) er die genannte ID den Teilnehmern zur Verwendung bei der Adressierung der Pakete der Verbindung mitteilt.

14. Server nach Anspruch 12 oder 13 ,
**dadurch gekennzeichnet,**
**dass**
a) er für einen ersten Teilnehmer (B-Tln) eine Teilnehmernummer vergibt,
b) er auf Anforderung mindestens eines weiteren Teilnehmers (A-Tln) anhand der genannten Nummer eine Verbindung in der genannten Art zu dem genannten ersten Teilnehmer herstellt.

15. Server nach Anspruch 14,
**dadurch gekennzeichnet,**
**dass** er die Nummer auf Anforderung eines der weiteren Teilnehmer und bei Zustimmung des ersten Teilnehmers (B-Tln) für eine einmalige Verbindung vergibt.

16. Server nach Anspruch 13,
**dadurch gekennzeichnet,**
**dass** er die Nummer auf Anforderung des ersten Teilnehmers (B-Tln) für eine bestimmte Zeitspanne vergibt.

17. Server nach Anspruch 12 oder 13,
**dadurch gekennzeichnet,**
**dass**
a) er von einem ersten Tln (A-Tln) eine Anforderung zum Herstellen einer Verbindung zu einem zweiten Tln (B-Tln) über eine bekannte Nummer des zweiten Tln empfängt,
b) er daraufhin die Verbindung in der genannten Weise herstellt.

18. Server nach Anspruch 17,
**dadurch gekennzeichnet,**
**dass** er vor dem Herstellen der Verbindung das Einverständnis des zweiten Tln einholt.

19. Server nach Anspruch 12 oder 13,
**dadurch gekennzeichnet,**
**dass**
a) er von einem ersten Tln (Mittler-Person) eine Anforderung zum Herstellen einer Verbindung zwischen einem zweiten und einem dritten Teilnehmer empfängt,
b) er daraufhin die angeforderte Verbindung in der genannten Weise herstellt.

20. Server nach einem der Ansprüche 12 bis 19,
**dadurch gekennzeichnet,**
**dass** er die Identität der Teilnehmer vor dem Herstellen der genannten Verbindung prüft.

21. Server nach Anspruch 20,
**dadurch gekennzeichnet,**
**dass** er die Identität nach dem PKI-Verfahren prüft.

22. Server nach Anspruch 20 oder 21,
**dadurch gekennzeichnet,**
**dass** er die über die genannte Verbindung zu übertragenden Daten verschlüsselt.
